# EUROPEAN PATENT SPECIFICATION

(11) **EP 4 357 628 B1**
(45) Date of publication and mention of the grant of the patent: **05.08.2026**
(21) Application number: 24162197.8
(22) Date of filing: 01.04.2022
(51) Int. Cl.: F16B 2/24, F16B 21/06, F16B 21/08

(54) **FASTENING CLIP ASSEMBLY**
BEFESTIGUNGSKLAMMERANORDNUNG
ENSEMBLE PINCE DE FIXATION

(43) Date of publication of application: 24.04.2024
(62) Divisional of application: 22166372.7
(73) Proprietor: Illinois Tool Works Inc., Glenview IL 60025 (US)
(72) Inventor: DIEZ, Victor, Glenview, IL 60025 (US)
(74) Representative: HGF

(56) References cited:
- EP-A1- 3 748 169
- EP-A1- 3 754 207
- EP-A1- 3 822 497
- WO-A1-2020/030475
- CN-U- 213 176 368
- US-A1- 2015 300 388

## Description

### TECHNICAL FIELD

This invention generally relates to the field of fasteners and in particular, to the field of fastening clips for attaching one or more components, such as airbag devices, to an external structure. More specifically, the present invention relates to a fastening clip assembly for attaching a side-impact airbag or curtain-type airbag to a vehicle structure.

### BACKGROUND

Airbags are safety devices used in the motor industry and which, in combination with other safety components, such as seatbelts, help to reduce fatal accidents in the case of collisions. The tests to which the vehicles have been subjected, as well as mortality statistics, have clearly demonstrated that the use of airbags can considerably improve the safety of automobile occupants and, when combined with other forms of passive safety, such as seat belts, significantly reduce mortality in the case of serious accidents.

Today, manufacturers produce frontal airbags, which are designed to protect the driver and/ or passenger in the event of a head-on collision and, considering their positions, lateral airbags that are installed behind the posts and/or in the sides of the vehicle seats, along with curtain airbags.

Airbags of the curtain type are usually located in the part close to the roof on the sides of the automobile, e.g. situated above the front and rear doors. Such airbags have very rigorous requirements with regards to the goals set for them and the technical challenges that have to be overcome. Typical challenges may be their location in the vehicle and the way they are fastened, required deployment time and the time that the airbag is required to remain inflated. Other challenges may come from the fact that there is only a short distance between the body and the occupant and that there is little vehicle material between the occupant and an impacting vehicle. For example, it is essential that airbags are deployed in a fraction of a second, giving rise to an enormous snatch force on their attachment components, which then suffer the consequences of that impact.

Further, when installing new or restore previously deployed airbags, it is well known in the industry that the installation or restoration is tedious work, comprising steps, such as, (i) dismantling all the attachments of the airbag, (ii) replacing the airbag and installing a new one, and then again (iii) fitting all its attachments. The work involved generally requires the installer to at least partly manually assemble the clip components with the airbag and push the assembly into a vehicle panel or structure to attach or operably couple the airbag to the vehicle.

US2015300388A1 discloses a cramping fastener device for assembling a part (7) to a support portion (18). The device includes a fastener clip with a deformable catch element that defines a cramping face. The catch element is designed to be pushed through the part and through the support portion and to have a cramping face that is resiliently retractable into the clip. The device also includes proper-assembly indicator for checking that the clip is properly assembled in the cramping position.

### SUMMARY

According to the present invention there is provided a fastening clip assembly for mounting in a hole of a component, the fastening clip assembly comprising:
a fastening clip having a head portion and a body portion extending from the head portion, the body portion comprising an internal cavity and an elastically deflectable retaining member extending out of the internal cavity to engage the component on an opposite side to the head portion to retain the fastening clip assembly in the hole of the component; and
an insert located in the internal cavity, the insert comprising an engaging surface and a hook;
wherein the insert is moveable between:
   an initial position in which the engaging surface engages a first side of the elastically deflectable retaining member that faces the head portion for pushing the fastening clip assembly into the hole of the component, and
   a locked position in which the hook engages a second side of the elastically deflectable retaining member opposite to the first side to hold the insert in the locked position.

Advantageously, the hook on the insert prevents the insert from being withdrawn towards the initial position once it has reached the locked position. When the insert is in the locked position it prevents the elastically deflectable retaining member from deflecting inwards, which would allow the fastening clip assembly to be removed from the hole in the component.

In examples, the insert may be engaged with an end of the elastically deflectable retaining member located within the internal cavity.

In particular, the elastically deflectable retaining member may extend from a distal end of the body portion, opposite to the head portion. The elastically deflectable retaining member may be folded inwardly into the internal cavity and protrude externally of the internal cavity through an opening in the body portion. The end of the elastically deflectable retaining member may extend back through the opening into the internal cavity. In this way, the insert may be arranged to engage the end of the elastically deflectable retaining member within the internal cavity.

In examples, the end is not directly attached to the body portion. That is, the end is a free end of the elastically deflectable retaining member. The end of the elastically deflectable retaining member may move within the internal cavity as the elastically deflectable retaining member is deflected during insertion of the fastening clip assembly through the hole in the component.

In examples, the end of the elastically deflectable retaining member may comprise a folded section arranged to be engaged by the engaging surface of the insert in the initial position. The end of the elastically deflectable retaining member may also comprise a free end arranged to be engaged by the hook of the insert in the locked position. In particular, the end of the elastically deflectable retaining member may comprise a folded edge directed towards the head portion of the fastening clip. The folded edge may provide the first side of the elastically deflectable retaining member that is engaged by the engaging surface of the insert. The folded edge may be located between a part of the elastically deflectable retaining member that extends out of the body portion, and the free end. The free end may be directed away from the head portion of the fastening clip to provide the second side of the elastically deflectable retaining member that is engaged with the hook of the insert.

In examples, the fastening clip has a second elastically deflectable retaining member extending out of the internal cavity in a direction opposite to the elastically deflectable retaining member. In such examples, the insert may have a first leg comprising the engaging surface and the hook, and a second leg comprising a second engaging surface and a second hook. The first leg may be arranged to engage the elastically deflectable retaining member and the second leg may be arranged to engage the second elastically deflectable retaining member. The insert may therefore engage both the elastically deflectable retaining member and the second elastically deflectable retaining member to lock the fastening clip assembly in the hole of the component.

Further examples in the present disclosure provide a fastening clip for mounting in a hole of a component, the fastening clip comprising a head portion adapted to be positioned against a first surface of the component and a body portion extending from the head portion and adapted to protrude through the hole in the component,
wherein the body portion comprises an elastically deflectable retaining member adapted to deflect inwardly in a deflecting direction as the body portion is pushed through the hole of the component, and to engage a second surface of the component, opposite to the first surface, to retain the fastening clip in the hole of the component, and
wherein the body portion further comprises an abutment configured to engage the elastically deflectable retaining member as it is deflected inwardly to prevent deformation of the elastically deflectable retaining member in a second direction, generally perpendicular to deflection direction.

During mounting of the fastening clip into the hole of the component an insertion force is applied to push the fastening clip through the hole. The insertion force is applied in an insertion direction aligned with the hole in the component. The insertion force acts on the elastically deflectable retaining member as it passes through the hole to deflect the elastically deflectable retaining member inwards. If that insertion force is excessive or not aligned with the hole then the elastically deflectable retaining member may be deformed in the direction that the insertion force is applied, i.e., in the insertion direction. Deformation of the elastically deflectable retaining member in this way may prevent it from functioning properly, and in particular may prevent the elastically deflectable retaining member from returning to the extended position to engage the second surface of the component. The abutment advantageously prevents deformation in the insertion direction and so ensures that the elastically deflectable retaining member functions properly if the insertion force was excessive or mis-aligned.

In examples, the body portion may comprise a sidewall, and the abutment may be formed on the sidewall. The sidewall may be in a plane generally parallel to the deflection direction. That is, the sidewall may be alongside the elastically deflectable retaining member within the body portion and the abutment may be provided on the sidewall to engage the elastically deflectable retaining member as it is deflected inwards.

In examples, the body portion may comprise a first section and a second section opposite to the first section. The sidewall may comprise a first sidewall section extending from the first side section and a second sidewall section extending from the second sidewall section. The sidewall may thus extend between the first section and the second section of the body portion. A tab of the first sidewall section may overlap the second sidewall section and provide the abutment. The abutment may be an edge of the tab overlapping the second sidewall section. The edge of the tab may be directed towards the head portion of the fastening clip. The tab may overlap the second sidewall section on an internal side of the second sidewall section.

In examples, the tab may comprise a protrusion arranged to contact the second sidewall section to space the tab from the second sidewall section. In this way, the abutment may be spaced from the second sidewall section and may be better aligned with the elastically deflectable retaining member.

In examples, the fastening clip comprises a second elastically deflectable retaining member arranged opposite to the elastically deflectable retaining member. The body portion may additionally include a second sidewall, opposite to the sidewall. The second sidewall may be formed in the same manner as the sidewall, i.e., from first and second sidewall sections extending from the first and second sections of the body portion, respectively. A second abutment may be formed on the second sidewall. The second abutment may be formed by a tab extending from the second sidewall section and overlapping the first sidewall section. Accordingly, two abutments may be provided, one of each of the two elastically deflectable retaining members.

In examples, the fastening clip is formed from a folded sheet. In particular, the fastening clip may be formed from a single folded sheet. The head portion may comprise a planar top surface and the first and second sections of the body portion may extend from opposing ends of the top surface. The first and second sections may be joined to the top surface by double folds, each having a first fold such that the sheet extends back on itself, and a second fold merging into the body portion. In this way the head portion is wider than the body portion.

In examples, the elastically deflectable retaining member may extend from a distal end of the second section of the body portion, opposite to the head portion. The elastically deflectable retaining member is folded inwardly into the body portion and protrudes through an opening in the second section of the body portion.

In examples, the elastically deflectable retaining member comprises an end disposed within the body section. The end may be arranged to engage the abutment. The end may extend through the opening in the second section of the body portion.

In examples that include a second elastically deflectable retaining member, the second elastically deflectable retaining member may extend from the distal end of first section of the body portion and through an opening in the first section of the body portion. The second elastically deflectable retaining member is thereby formed opposite the elastically deflectable retaining member.

Further examples in the present disclosure provide a fastening clip assembly for mounting in a hole of a component. The fastening clip assembly comprises the fastening clip described above and an insert configured to be inserted through an opening in the head portion of the fastening clip.

In examples, the insert may extend into the body portion and engage the elastically deflectable retaining member. In particular, the insert may comprise a leg that engages the elastically deflectable retaining member within the body portion. In particular, the leg may engage an end of the elastically deflectable retaining member within the body portion.

During mounting of the fastening clip assembly into the hole of the component an insertion force may be applied on the insert that acts against the elastically deflectable retaining member. This insertion force acts to push the fastening clip assembly through the hole and deflect the elastically deflectable retaining member inwards as it passes through the hole.

As the fastening clip assembly passes through the hole in the component the elastically deflectable retaining member deflects inwards, and as it passes to the second side it returns outward and permits the leg of the insert to move past the elastically deflectable retaining member and the insert can move further into the body portion of the fastening clip. Once the leg has moved past the elastically deflectable retaining member it may prevent inwards movement of the elastically deflectable retaining member, thereby locking the fastening clip assembly in the hole of the component. Movement of the insert into the fastening clip may also provide an indication that the elastically deflectable retaining member has sprung back outwards and is engaged with the second side of the component, indicating correct mounting.

Advantageously, in this example the abutment is configured to prevent deformation of the elastically deflectable retaining member as the insertion force is applied via the insert. As the insertion force is transferred by the insert directly onto the elastically deflectable retaining member, the abutment will prevent this insertion force from deforming the elastically deflectable retaining member in the direction of the insertion force.

In some examples the fastening clip may have a second elastically deflectable retaining member, as described above. In such examples the insert may have first and second legs that engage the elastically deflectable retaining member and the second elastically deflectable retaining member, respectively. The legs may transfer the insertion force onto the elastically deflectable retaining member and the second elastically deflectable retaining member, and may deflect inwards as the elastically deflectable retaining members are deflected inwards. The legs may, respectively, lock the elastically deflectable retaining member and the second elastically deflectable retaining member.

Further examples in the present disclosure provide an insert for engaging a fastening clip of a fastening clip assembly, the insert comprising a head portion having a deflectable arm adapted to be deflected by engagement with the fastener clip during use, and a body portion extending from the head portion and adapted to be inserted into the fastener clip during use,
wherein the deflectable arm comprises an inner section joined to the head portion and an outer section extending from the inner section, wherein the inner section comprises a lower thickness than the outer section, and
wherein the outer section of the deflectable arm may comprise a protrusion to engage the fastening clip.

During use the insert may be moveable relative to the fastener clip between an initial position in which the deflectable arm is in a first position, and a locked position in which the deflectable arm is deflected relative to the first position by engagement with the fastener clip.

Advantageously, the thinner inner section requires a low force to deflect the deflectable arm as the insert moves relative to the fastener clip. This may reduce the overall insertion force required to insert the fastening clip assembly into a hole in a component. In particular, a living hinge may be provided between the head portion and the inner section of the deflectable arm. The thinness of the living hinge provides low resistance as the deflectable arm is deflected.

Additionally, the protrusion may reduce the surface contact area between the deflectable arm and the fastening clip, further reducing the insertion force as friction between the deflectable arm and fastening clip will be reduced. In examples, the protrusion may be rounded. Accordingly, the surface contact area between the deflectable arm and fastening clip will be consistent throughout the deflection of the deflectable arm. The rounded surface may also prevent jamming against the fastening clip.

In examples, the outer section has width extending parallel to the inner section, and the protrusion has a width less than the width of the outer section. Accordingly, the contact surface area between the deflectable arm and the fastening clip is further reduced.

In examples, the insert may further comprise a second deflectable arm extending from an opposite side of the head portion. The second deflectable arm may be the same as the deflectable arm and engage an opposite side of the fastening clip.

Further examples in the present disclosure provide a fastening clip assembly for mounting in a hole of a component, the fastening clip assembly comprising a fastening clip and the insert described above. The fastening clip comprises a head portion and a body portion arranged to be inserted through the hole in the component. The head portion comprises an opening to receive the insert. The or each deflectable arm is arranged to engage the head portion of the fastening clip.

In examples, the head portion of the fastening clip comprises a substantially planar top surface that is engaged by the or each deflectable arm. In the locked position the head portion of the insert may be closer to the top surface than in the initial position. That is, the head portion of the insert is moved towards the top surface as it moves from the initial position to the locked position. In the initial position the or each deflectable arm may be angled with respect to the top surface, and in the locked position the or each deflectable arm may be substantially parallel to the top surface.

In examples, the body portion of the fastening clip may include at least one elastically deflectable retaining member arranged to deflect inwards as the fastening clip assembly is pushed through the hole of the component, and to spring outwards to engage an opposite side of the component and retain the fastening clip assembly in the hole.

As will be apparent from the accompanying detailed description, the various aspects of the disclosure described above may be combined. In particular, the first and second aspects of the disclosure may be combined with the third and/or fourth and/or fifth aspects of the disclosure. Similarly, the third and/or fourth aspects may be combined with the fifth aspect of the disclosure.

### BRIEF DESCRIPTION OF THE DRAWINGS

The invention is described hereinafter with reference to the accompanying drawings, in which:
FIG. 1 shows a perspective view of a fastening clip assembly;
FIG. 2 shows a side view of the fastening clip assembly;
FIGS. 3A and 3B show perspective and cross-sectional side views, respectively, of the fastening clip of the fastening clip assembly;
FIGS. 4A and 4B show perspective and side views, respectively, of the insert of the fastening clip assembly;
FIGS. 5A, 5B, and 5C show a perspective view, a side view, and a cross-sectional side view, respectively, of the fastening clip assembly in an initial position;
FIGS. 6A and 6B show a side view and a cross-sectional side view of the fastening clip assembly in a locked position;
FIG. 7 shows a cross-sectional perspective view of the fastening clip illustrating the abutment;
FIG. 8 shows a cross-sectional end view of the fastening clip illustrating the abutment;
FIG. 9 shows a side view of the head portion of the insert, and
FIG. 10 shows a perspective view of the head portion of the insert.

### DETAILED DESCRIPTION

The described example embodiment relates to a fastening clip suitable for securing paraphernalia and accessories. The embodiment(s) of the invention are normally applied in vehicles. Although the invention is described with respect to vehicles, the invention is not restricted to vehicles altogether, but may also be used in other structures requiring attachment of accessories or peripheral components to a structure.

Certain terminology is used in the following description for convenience only and is not limiting. The words 'right', 'left', 'lower', 'upper', 'front', 'rear', 'upward', 'down' and 'downward' designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, 'first', 'second', 'third' etc. merely indicate that different instances of like objects are being referred to and are not intended to imply that the objects so described must be in a given sequence, either temporally, spatially, in ranking or in any other manner.

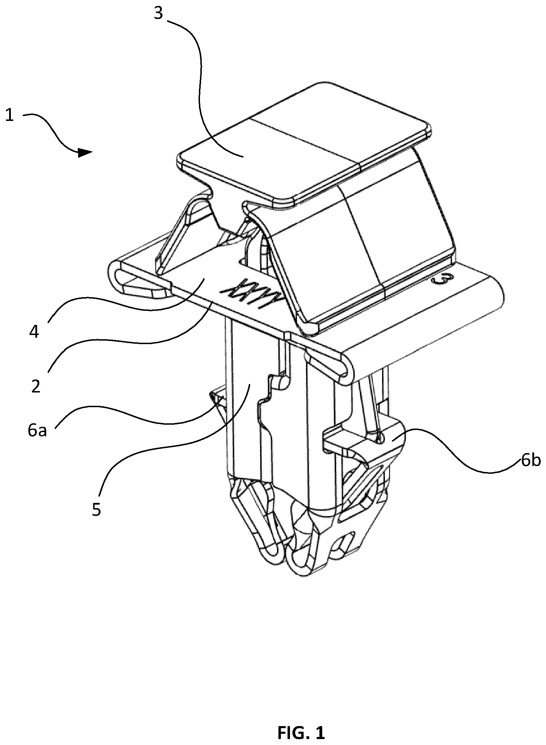

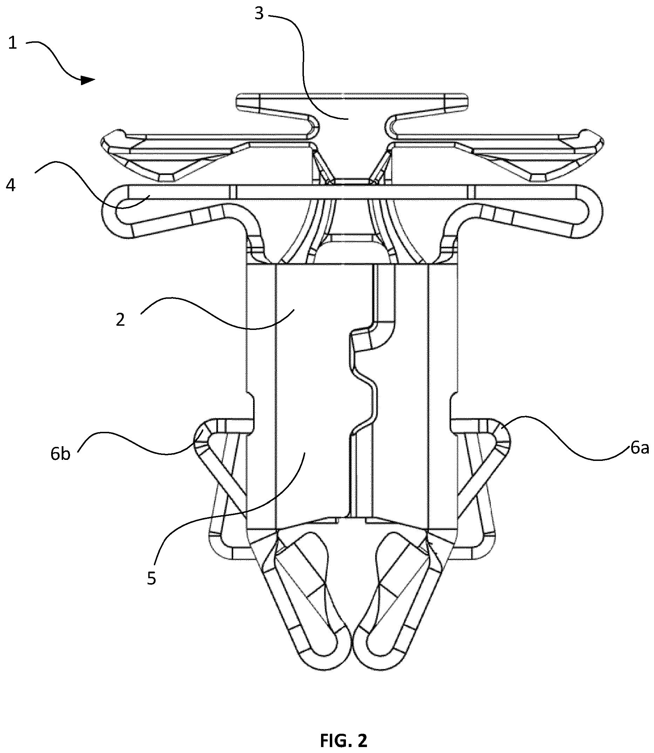

FIGS. 1 and 2 show a fastening clip assembly 1 comprising a fastening clip 2 and an insert 3. As described in more detail hereinafter, the fastening clip 2 comprises a head portion 4, a body portion 5 extending from the head portion 4, and first and second elastically deflectable retaining members 6a, 6b. The insert 3 is insertable into the fastening clip 2 and during assembly with a component the insert 3 moves between an initial position, shown in FIG. 1, and a locked position shown in FIG. 2. In the locked position the fastening clip assembly 1 is assembled in a hole of the component and the insert 3 acts to prevent retraction of the fastening clip assembly 1 from the component.

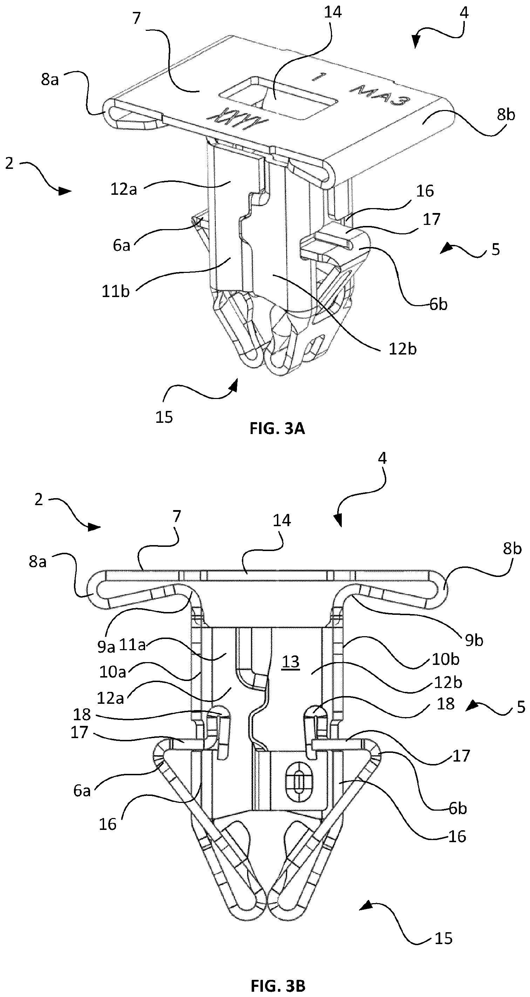

FIGS. 3A and 3B show the fastening clip 2 in isolation, with FIG. 3B showing a cross-section of the fastening clip 2. As illustrated, the body portion 5 extends from the head portion 4. The fastening clip 2 is formed from a folded sheet. The folded sheet is a single piece of material, preferably sheet metal such as stainless steel, folded to form the head portion 4 and the body portion 5.

As illustrated most clearly in FIG. 3B, the head portion 4 comprises a planar (i.e., flat) top wall 7. The head portion 4 comprises first and second bends 8a, 8b at opposite ends of the top wall 7. The first and second bends 8a, 8b extend into opposing bends 9a, 9b that extend into first and second sections 10a, 10b of the body portion 5. The first and second bends 8a, 8b and opposing bends 9a, 9b form double bends that join the head portion 4 to the body portion 5. The first and second sections 10a, 10b of the body portion 5 are substantially parallel to each other and spaced apart. The width of the body portion 5, between the first and second sections 10a, 10b, is less than the width of the head portion 4 due to the double bends. Accordingly, when the body portion 5 is mounted in the hole of the component the head portion 4 abuts the surface of the component.

A first sidewall 11a is formed by a first sidewall section 11a extending from the first section 10a of the body portion 5 and a second sidewall section 11b extending from the second section 10b of the body portion 5. The first and second sidewall sections 12a, 12b meet between the first and second sections 10a, 10b to form the first sidewall 11a.

A second sidewall 11b, shown in FIG. 3A, is formed in the same manner.

Between the first and second sections 10a, 10b and the first sidewall 11a and second sidewall, an internal cavity 13 is defined.

The top wall 7 comprises an opening 14 to receive the insert (3, see FIGS. 1 and 2) as described hereinafter.

The body portion 5 also comprises the first and second retaining members 6a, 6b. As shown, the first retaining member 6a extends from a distal end 15 of the body portion 5 opposite to the head portion 4.

The first retaining member 6a extends from the distal end 15 of the first section 10a of the body portion 5. The first retaining member 6a is bent inwardly into the internal cavity 13 and extends through an opening 16 in the first section 10a of the body portion 5. A retaining portion 17 of the first retaining member 6a is thereby provided externally of the body portion 5. The first retaining member 6a extends back through the opening 16 into the internal cavity 13 where an end 18 of the first retaining member 6a is disposed. The end 18 is not directly connected to the body portion 5 and so can move within the internal cavity. In particular, the first retaining member 6a is elastically deflectable so that the retaining portion 17 can move into the internal cavity 13 during mounting, and will spring back out to the position shown in FIGS. 3A and 3B once the fastening clip 2 has been mounted in the hole as described further hereinafter.

The second retaining member 6b is formed in the same way as the first retaining member 6a and extends from the second section 10b of the body portion 5 and through an opening 16 in the second section 10b of the body portion 5.

The first and second retaining members 6a, 6b are elastically deflectable and act to retain the fastening clip 2 in a hole of a component during use, as described further hereinafter.

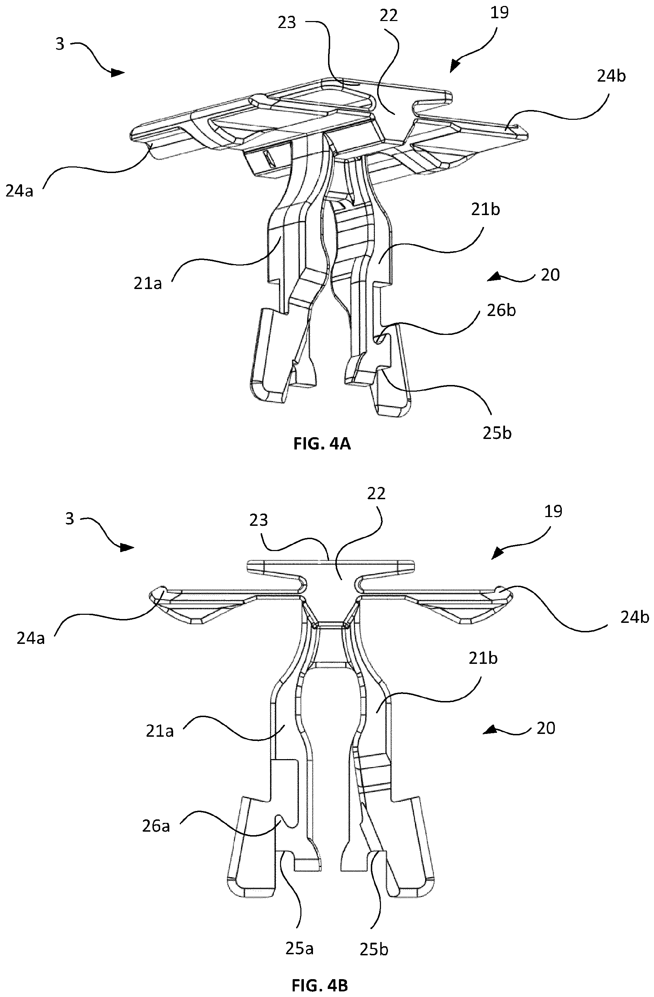

FIGS. 4A and 4B show the insert 3 in isolation. As illustrated, the insert 3 comprises a head portion 19 and a body portion 20. The body portion 20 has a first leg 21a and a second leg 21b. The first leg 21a and the second leg 21b are formed on opposite sides of the insert 3. The first leg 21a and the second leg 21b are separate and so can deflect towards and away from each other, as described further hereinafter.

The insert 3 is preferably formed from a polymer, for example polyoxymethylene. The insert 3 is preferably injection moulded.

The head portion 19 comprises a central part 22 defining a pushing area 23, and first and second deflectable arms 24a, 24b extending sideways. The deflectable arms 24a, 24b may extend sideways in the same direction as the first and second legs 21a, 21b, or perpendicular to the legs 21a, 21b. As described further hereinafter, the fastening clip assembly 1 is mounted to the hole by pushing the central part 22 on the pushing area 23, and the first and second deflectable legs 24a, 24b are deflected sideways as the body portion 5 passes through the hole in the component.

Each of the first leg 21a and the second leg 21b comprises an engaging surface 25a, 25b arranged to engage the retaining members (6a, 6b see FIGS. 3A and 3B) when the fastening clip is assembled. Each of the first leg 21a and the second leg 21b also comprises a hook 26a, 26b configured to engage the retaining members (6a, 6b see FIGS. 3A and 3B) when the fastening clip is mounted to the hole in the component, as described further hereinafter.

The engaging surfaces 25a, 25b face away from the head portion 19, and the hooks 26a, 26b are facing towards the head portion 19, opposite to the engaging surfaces 25a, 25b. FIG. 4A shows the second engaging surface 25b and the second hook 26b, and FIG. 4B shows the first engaging surface 25a and the first hook 26a, as well as the second engaging surface 26b. The second hook 26b is not visible in FIG. 4B.

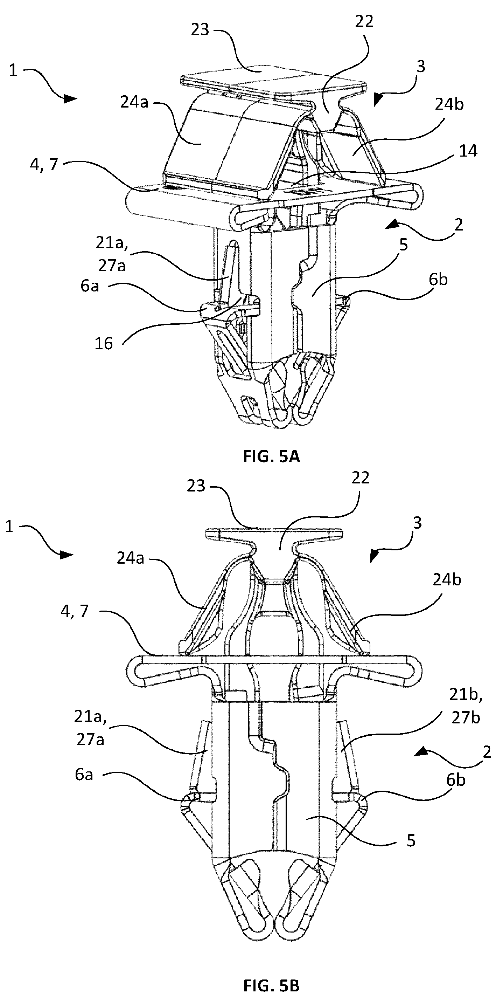

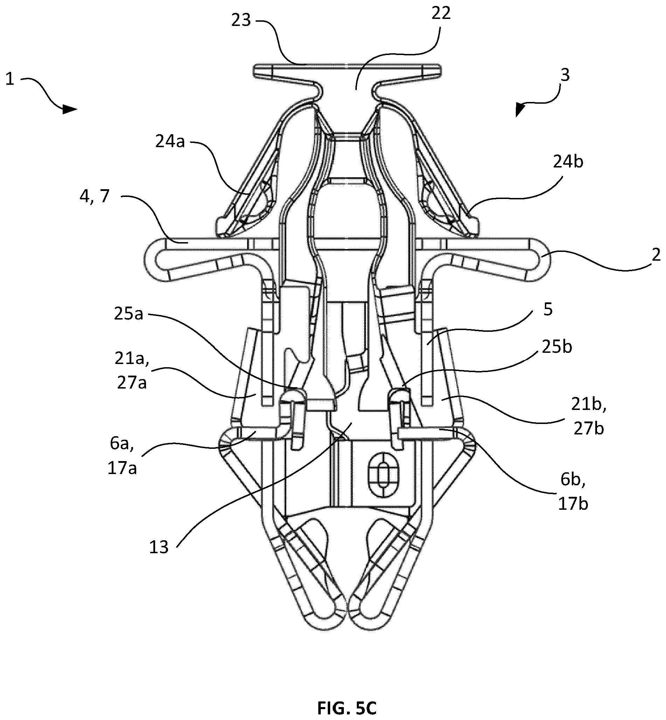

FIGS. 5A to 5C show the fastening clip assembly 1 in an initial, pre-assembled position, before it is mounted to the hole of the component. In this configuration the insert 3 is inserted through the opening 14 in the top wall 7 of the head portion 4. Specifically, the legs 21a, 12b are inserted through the opening 14 and are disposed in the internal cavity 13 of the body portion 5 of the fastening clip 2.

In this initial position the engaging surfaces 25a, 25b of the legs 21a, 21b are in engagement with the retaining portions 17a, 17b of the retaining members 6a, 6b within the internal cavity 13. Specifically, the engaging surfaces 25a, 25b are in engagement with the retaining portions 17a, 17b on a side facing the head portion 4 of the fastening clip 2. Parts 27a, 27b of the legs 21a, 21b protrude through the openings 16 in the side sections 10a, 10b of the body portion 5. The parts 27a, 27b may prevent the insert 3 from being removed from the fastening clip 2.

In this initial position the insert 3, in particular the pushing surface 23, can be pressed towards the fastening clip 3 and the pressure will be transferred to the fastening clip 3 via the engaging surfaces 25a, 25b acting on the retaining members 6a, 6b within the internal cavity 13.

As also shown, in this initial position the deflectable arms 24a, 24b of the insert 3 are angled with respect to the top wall 7 of the fastening clip 2.

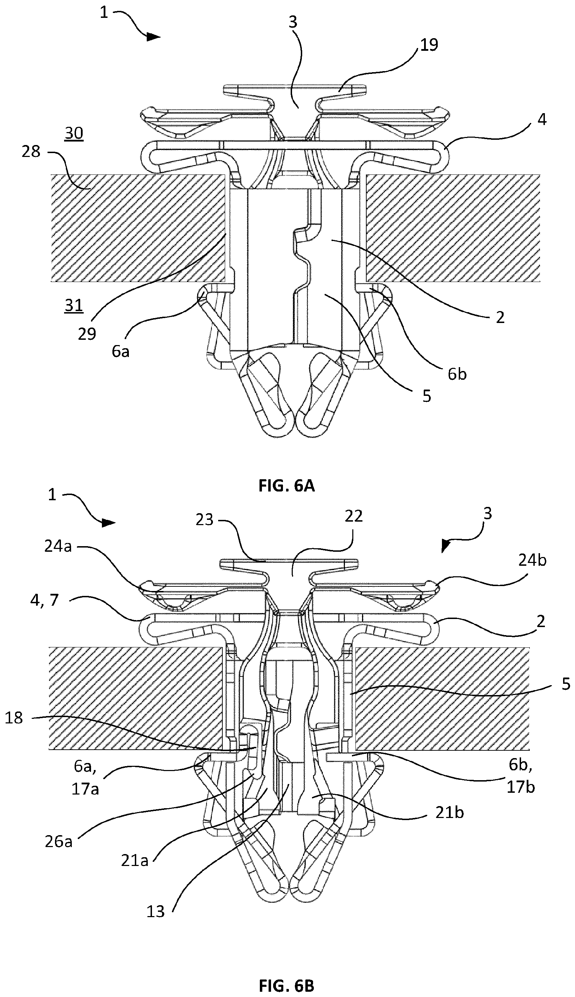

FIGS. 6A and 6B show the fastening clip assembly 1 mounted to a component 28. In particular, the fastening clip assembly 1 is mounted in a hole 29 in the component 28. The component 28 is shown as a single piece having a thickness through which the hole 29 extends. However, in use the component 28 may be two or more pieces laid on top of each other, with the hole 29 extending through both components. In this example the fastening clip 1 may be used to fasten together the different pieces of the component 28. For example, the fastening clip assembly may be used to fasten an airbag assembly to an attachment panel of a vehicle, as set out in the background section.

In the mounted position illustrated in FIGS. 6A and 6B the head portion 4 of the fastening clip 2 is on a first side 30 of the component 28. The head portion 4 may be in contact with the component 28 on the first side 30. The head portion 19 of the insert 3 is also positioned on the first side 30 of the component 28. The body portion 5 of the fastening clip 2 extends through the hole 29 and the body portion (20, see FIGS. 4A, 4b) of the insert 3 is within the internal cavity inside the body portion 5.

As illustrated, in the mounted position the retaining members 6a, 6b engage the opposite side of the component 28 to the head portion 4. The retaining members 6a, 6b thereby retain the fastening clip assembly 1 in the hole 29.

In the mounted position shown in FIGS. 6A and 6B the insert 3 acts to keep the retaining members 6a, 6b in the illustrated position, so that the fastening clip assembly 1 is locked in the hole 29. In particular, as shown in FIG. 6B, in the mounted position the insert 3 has moved relative to the fastening clip 2, further into the body portion 5 of the fastening clip 2. In this position, the hooks 26a, 26b of the legs 21a, 21b engage the ends 18a, 18b of the retaining members 6a, 6b. The hooks 26a, 26b are hooked around the ends 18a, 18b opposite to the head portion 4, such that the hooks 26a, 26b prevent movement of the insert 3 back towards the pre-assembled position shown in FIGS. 5A to 5B.

During mounting of the fastening clip assembly 1 to the hole 29 in the component 28 pressure is applied to the pushing surface 23 and through the insert 3 onto the retaining members 6a, 6b of the fastening clip 2. As the fastening clip 2 passes through the hole 29 the retaining members 6a, 6b are deflected inwardly, into the internal cavity 13, allowing the retaining members 6a, 6b to pass through the hole 29. The legs 21a, 21b are also deflected inwardly because they are in contact with the retaining members 6a, 6b.

Once the retaining members 6a, 6b have passed through the hole 29 they spring outwards into the position shown in FIGS. 6A and 6B. As they spring outwards the engaging surfaces 25a, 25b disengage the retaining members 6a, 6b and the insert 3 can move down into the position shown in FIGS. 6A and 6B. In this position the hooks 26a, 26b engage the ends 18a, 18b of the retaining members 6a, 6b.

Accordingly, when the fastening clip 2 is mounted into the hole 29 such that the retaining members 6a, 6b are in the position shown in FIGS. 6A and 6B, the insert 3 moves further into the fastening clip 2 and acts firstly to lock the fastening clip assembly 1 by the hooks 25a, 25b and also provides a visual indication that the fastening members 6a, 6b have sprung back out to the position shown in FIGS. 6A and 6B to retain the fastening clip assembly 1 in the hole 29.

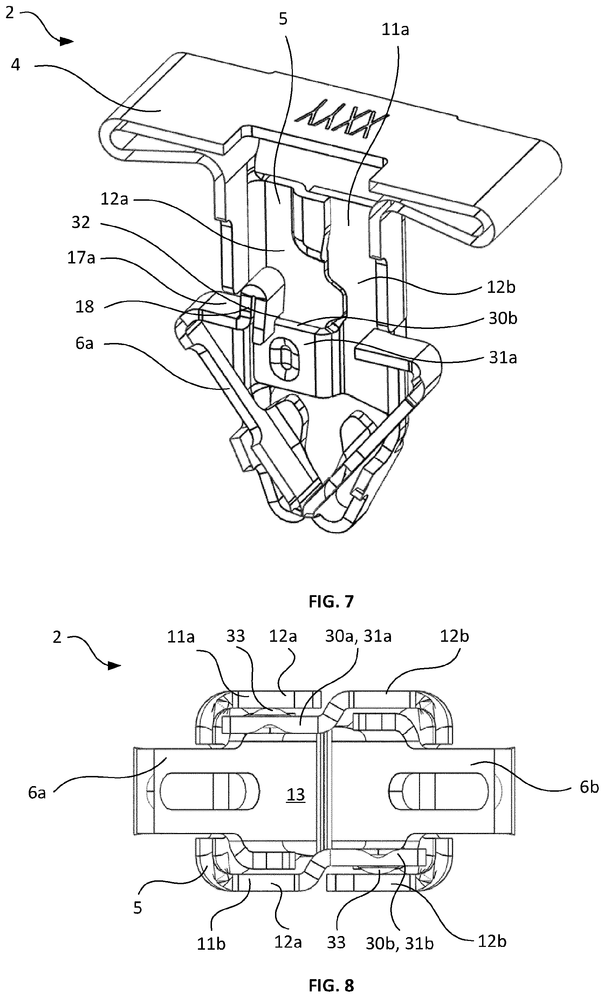

FIG. 7 illustrates an abutment 30b formed within the fastening clip 2 and configured to engage the retaining member 6a as it is deflected inwardly. The engagement between the retaining member 6a and the abutment 30b prevents deformation of the retaining member 6a in the direction that the insertion force is applied, i.e., away from the head portion 4.

As illustrated in FIGS. 7 and 8, the abutment 30a is provided by a tab 31a of the sidewall 11a. The tab 31 extends from the second sidewall section 12b and overlaps the first sidewall section 12a on an internal side, within the internal cavity 13. A top surface of the tab 31 provides the abutment 30.

As shown in FIG. 7, the abutment 30a is aligned with the end 18 of the retaining member 6a. In particular, the end 18 of the retaining member 6a has a notch 32 that aligns with the abutment 30. The abutment 30a faces the head portion 4 of the fastening clip 2. The abutment 30a is generally parallel to the direction that the retaining member 6a is deflected during mounting of the fastening clip assembly 1. In this way, as the retaining member 6a is deflected inwardly during mounting (see description of FIGS. 6A and 6B) the abutment 30a will prevent the retaining member 6a from being deflected away from the head portion 4, in the direction of the insertion force. This is particularly advantageous as the insertion force is applied to the retaining member 6a via the insert (see FIGS. 5A to 6B). Any deformation of the retaining member 6a may prevent or interrupt the retaining member 6a from springing back out once inserted through the hole in the component, and the abutment 30a prevents this.

In some examples, the abutment 30a may act as a guide along which the retaining member 6a slides as it is deflected inwardly and returns to its extended position. In other examples the abutment 30a may be spaced, by a small amount, from the retaining member 6a in order not to introduce additional friction but still prevent deformation. For example, the abutment 30a may be positioned such that the retaining member 6a only contacts the abutment when it is at or near the maximum inward deflection, or the abutment 30a may be positioned such that the retaining member 6a only makes contact with the abutment 30a when excess force is applied to the retaining member 6a during insertion.

As shown in FIG. 8, a second abutment 30b is formed in the opposing second sidewall 11b. The second abutment 30b is formed by a tab 31b that extends from the second sidewall section 12b and overlaps the first sidewall section 12a of the second sidewall 12b on an internal side. The second abutment 30b works in the same way as the abutment 30a and acts to prevent deformation of the second retaining member 6b.

As shown most clearly in FIG. 8, each tab 31a, 31b also has a protrusion 33 that acts to space the tab 31 from the underlying sidewall portion (12a for the first tab 31a and 12b for the second tab 31b). The protrusion 33 may be formed by a depression in the opposite side of the tab 31a, 31b.

Advantageously, it is relatively simple to form the abutments 30a, 30b by the tabs 31a, 31b that extend from the sidewall portions 12a, 12b. The tabs 31a, 31b can be folded / positioned as the other parts of the fastening clip 2 are folded and positioned, and no additional punching or cutting operation is needed.

As shown in FIGS. 5A to 6B, during mounting of the fastening clip assembly 1 in the hole 19 of the component 28 the insert 3 moves further into the fastening clip 2. During this movement, the deflectable arms 24a, 24b move from an initial position, shown in FIGS. 5A to 5C, in which they are angled with respect to the head portion 4 of the fastening clip 2, to an assembled position, shown in FIGS. 6A and 6B, in which they are generally parallel to the head portion 4. That is, the deflectable arms 24a, 14b are deflected outwards as the insert 3 moves into the fastening clip 2.

The deflectable arms 24a, 24b provide a visual indication that the insert 3 has moved to the mounted position and the fastening clip assembly 1 is properly mounted in the hole 29.

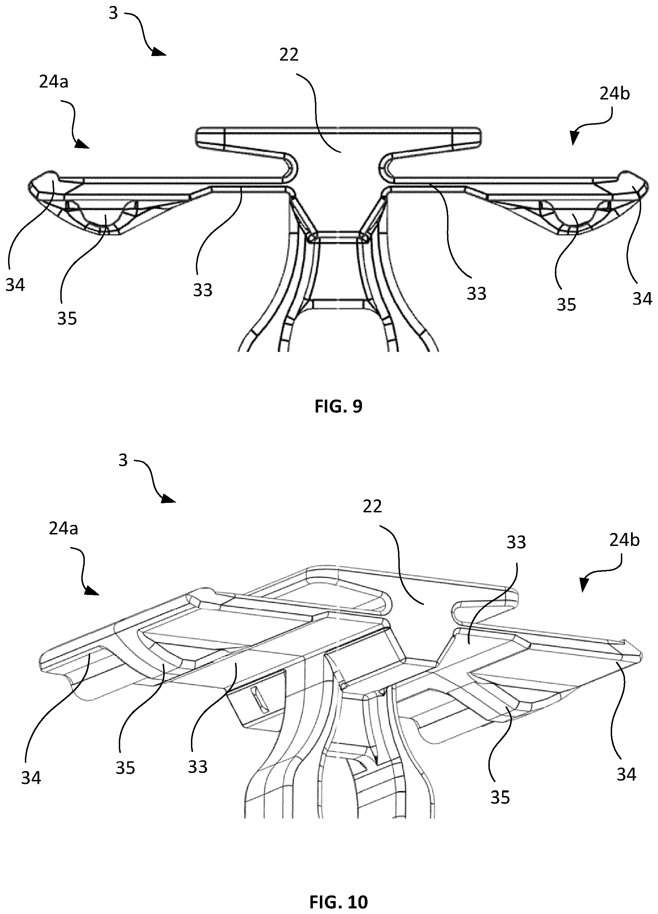

FIGS. 9 and 10 show further detail of the deflectable arms 24a, 24b. As illustrated, the first deflectable arm 24a extends from the central part 22 of the head portion 19. The first deflectable arm comprises an inner section 33 joined to the central part 22, and an outer section 34 extending from the inner section 33. In this way, the inner section 33 is located between the central part 22 and the outer section 34.

The inner section 33 may comprise about 20% to 50% of the length of each deflectable arm 24a, 24b extending away from the head portion 19. The inner section 33 may form a living hinge where it joins the head portion 19, allowing the deflectable arm 24a, 24b to rotate with respect to the head portion 19.

As illustrated, the inner section 33 has a lower thickness than the outer section 34. In particular, the inner section 33 may be less than about 50% of the thickness of the outer section 34, for example less than about 30% of the thickness of the outer section 34. In examples, the inner section 33 may have a thickness of less than about 1 mm, for example less than about 0.5 mm, for example between about 0.4 mm and about 0.5 mm.

The lower thickness of the inner section 33 reduces the bending stiffness of the inner section and therefore of the deflectable arm 24a. Accordingly, the insertion force required to move the insert 3 into the fastening clip (2, see FIG. 6A) is reduced when compared to deflectable arm not having a thinner inner section 33.

Additionally, as shown in FIGS. 9 and 10, the outer section 34 of the first deflectable arm 24a has a protrusion 35 that extends towards the head portion (4, see FIG. 6A) of the fastening clip (2, see FIG. 6A). The outer section 34 of the deflectable arm 24a has a width extending parallel to the inner section 33 and central part 22, and the protrusion 35 has a width less than the width of the outer section 34. The protrusion 35 has a rounded surface for engaging the head portion (4, see FIG. 7A) of the fastening clip (2, see FIG. 6A). Accordingly, the protrusion provides a relatively small surface contact area between the deflectable arm 24a and the head portion (4, see FIG. 7A) of the fastening clip (2, see FIG. 6A) as the deflectable arm 24a is deflected between the positions shown in FIGS. 5A and 6A. This small surface contact area further reduces the insertion force required to move the insert 3 into the fastening clip (2, see FIG. 6A). The rounded profile of the protrusion 35 may also help to prevent jamming between the deflectable arm 24a and the fastening clip.

The second deflectable arm 24b is the same as the first deflectable arm 24a but extends on the opposite side of the central part 22 of the head portion 19.

In some examples, the deflectable arms 24a, 24b may provide a visual indication that the fastening clip assembly 1 is properly mounted to the component 28 as shown in FIGS. 6A and 6B. In particular, the position of the deflectable arms 24a, 24b indicates the position of the insert 3 relative to the fastening clip 2, and when the deflectable arms 24a, 24b are substantially parallel to the head portion 4 of the fastening clip 2 the insert 3 must be in the locked position as shown in FIGS. 6A and 6B.

It will be appreciated by persons skilled in the art that the above embodiments have been described by way of example only and not in any limiting sense, and that various alterations and modifications are possible without departing from the scope of the invention as defined in the appended claims.

## Claims

1. A fastening clip assembly (1) for mounting in a hole of a component, the fastening clip assembly comprising:
a fastening clip (2) having a head portion (4) and a body portion (5) extending from the head portion, the body portion comprising an internal cavity (13) and an elastically deflectable retaining member (6a, 6b) extending out of the internal cavity to engage the component on an opposite side to the head portion to retain the fastening clip assembly in the hole of the component; and
an insert (3) located in the internal cavity, the insert comprising an engaging surface (25a, 25b) and a hook (26a, 26b);
wherein the insert is moveable between:
an initial position in which the engaging surface (25a, 25b) engages a first side of the elastically deflectable retaining member (6a, 6b) that faces the head portion (4) for pushing the fastening clip assembly into the hole of the component, and
a locked position in which the hook (26a, 26b) engages a second side of the elastically deflectable retaining member (6a, 6b) opposite to the first side to hold the insert in the locked position.

2. The fastening clip assembly of claim 1, wherein the insert (3) is engaged with an end (18a, 18b) of the elastically deflectable retaining member (6a, 6b) located within the internal cavity (13).

3. The fastening clip assembly of claim 2, wherein the end (18a, 18b) of the elastically deflectable retaining member (6a, 6b) comprises a folded section arranged to be engaged by the engaging surface (25a, 25b) of the insert (3) in the initial position, and a free end arranged to be engaged by the hook (26a, 26b) of the insert in the locked position.

4. The fastening clip assembly of any of claims 1 to 3, wherein the fastening clip (3) has a second elastically deflectable retaining member (6b) extending out of the internal cavity in a direction opposite to the elastically deflectable retaining member (6a), and wherein the insert (3) has a first leg (21a) comprising the engaging surface (25a) and the hook (26b), and second leg (21b) comprising a second engaging surface (25b) and a second hook (26b), the first leg (21a) being arranged to engage the elastically deflectable retaining member (6a) and the second leg (21b) being arranged to engage the second elastically deflectable retaining member (6b).

## Patentansprüche

1. Befestigungsklammeranordnung (1) zur Montage in einem Loch einer Komponente, wobei die Befestigungsklammeranordnung Folgendes aufweist:
eine Befestigungsklammer (2) mit einem Kopfabschnitt (4) und einem Körperabschnitt (5), der sich von dem Kopfabschnitt weg erstreckt, wobei der Körperabschnitt einen inneren Hohlraum (13) und ein elastisch auslenkbares Halteelement (6a, 6b) aufweist, das sich aus dem inneren Hohlraum heraus erstreckt, um mit der Komponente auf der dem Kopfabschnitt gegenüberliegenden Seite in Eingriff zu kommen, um die Befestigungsklammeranordnung in dem Loch der Komponente zu halten; und
einen Einsatz (3), der in dem inneren Hohlraum angeordnet ist, wobei der Einsatz eine Eingriffsfläche (25a, 25b) und einen Haken (26a, 26b) aufweist;
wobei der Einsatz beweglich ist zwischen:
einer Ausgangsposition, in der die Eingriffsfläche (25a, 25b) mit einer ersten Seite des elastisch auslenkbaren Halteelements (6a, 6b), die dem Kopfabschnitt (4) zugewandt ist, in Eingriff steht, um die Befestigungsklammeranordnung in das Loch der Komponente zu drücken, und
einer verriegelten Position, in der der Haken (26a, 26b) in eine zweite Seite des elastisch auslenkbaren Halteelements (6a, 6b) eingreift, die der ersten Seite gegenüberliegt, um den Einsatz in der verriegelten Position zu halten.

2. Befestigungsklammeranordnung nach Anspruch 1, wobei der Einsatz (3) mit einem Ende (18a, 18b) des elastisch auslenkbaren Halteelements (6a, 6b) in Eingriff steht, das innerhalb des inneren Hohlraums (13) angeordnet ist.

3. Befestigungsklammeranordnung nach Anspruch 2, wobei das Ende (18a, 18b) des elastisch auslenkbaren Halteelements (6a, 6b) einen gefalteten Abschnitt aufweist, der so angeordnet ist, dass er in der Ausgangsposition von der Eingriffsfläche (25a, 25b) des Einsatzes (3) in Eingriff gebracht wird, und ein freies Ende, das so angeordnet ist, dass es in der verriegelten Position von dem Haken (26a, 26b) des Einsatzes in Eingriff gebracht wird.

4. Befestigungsklammeranordnung nach einem der Ansprüche 1 bis 3, wobei die Befestigungsklammer (3) ein zweites elastisch auslenkbares Halteelement (6b) aufweist, das sich aus dem inneren Hohlraum in einer Richtung entgegengesetzt zu dem elastisch auslenkbaren Halteelement (6a) heraus erstreckt, und wobei der Einsatz (3) einen ersten Schenkel (21a) aufweist, der die Eingriffsfläche (25a) und den Haken (26b) aufweist, und einen zweiten Schenkel (21b), der eine zweite Eingriffsfläche (25b) und einen zweiten Haken (26b) aufweist, wobei der erste Schenkel (21a) so angeordnet ist, dass er mit dem elastisch auslenkbaren Halteelement (6a) in Eingriff kommt, und der zweite Schenkel (21b) so angeordnet ist, dass er mit dem zweiten elastisch auslenkbaren Halteelement (6b) in Eingriff kommt.

## Revendications

1. Ensemble de pince de fixation (1) pour montage dans un trou d'un composant, l'ensemble de pince de fixation comprenant :
une pince de fixation (2) ayant une partie de tête (4) et une partie de corps (5) s'étendant depuis la partie de tête, la partie de corps comprenant une cavité interne (13) et un élément de retenue (6a, 6b) pouvant être fléchi élastiquement, s'étendant hors de la cavité interne pour engager le composant sur un côté opposé à la partie de tête afin de retenir l'ensemble de pince de fixation dans le trou du composant ; et
un manchon (3) situé dans la cavité interne, le manchon comprenant une surface d'engagement (25a, 25b) et un crochet (26a, 26b) ;
dans lequel le manchon est mobile entre :
une position initiale dans laquelle la surface d'engagement (25a, 25b) engage un premier côté de l'élément de retenue (6a, 6b) pouvant être fléchi élastiquement, qui fait face à la partie de tête (4) pour pousser l'ensemble de pince de fixation dans le trou du composant, et
une position verrouillée dans laquelle le crochet (26a, 26b) vient en prise avec un deuxième côté de l'élément de retenue (6a, 6b) pouvant être fléchi élastiquement, opposé au premier côté pour maintenir le manchon dans la position verrouillée.

2. Ensemble de pince de fixation selon la revendication 1, dans lequel le manchon (3) est engagé avec une extrémité (18a, 18b) de l'élément de retenue (6a, 6b) pouvant être fléchi élastiquement, située à l'intérieur de la cavité interne (13).

3. Ensemble de pince de fixation selon la revendication 2, dans lequel l'extrémité (18a, 18b) de l'élément de retenue (6a, 6b) pouvant être fléchi élastiquement comprend une section pliée agencée pour être engagée par la surface d'engagement (25a, 25b) du manchon (3) dans la position initiale, et une extrémité libre agencée pour être engagée par le crochet (26a, 26b) du manchon dans la position verrouillée.

4. Ensemble de pince de fixation selon l'une quelconque des revendications 1 à 3, dans lequel le pince de fixation (3) a un deuxième élément de retenue (6b) pouvant être fléchi élastiquement, s'étendant hors de la cavité interne dans une direction opposée à l'élément de retenue (6a) pouvant être fléchi élastiquement, et dans lequel le manchon (3) a une première branche (21a) comprenant la surface d'engagement (25a) et le crochet (26b), et une deuxième branche (21b) comprenant une deuxième surface d'engagement (25b) et un deuxième crochet (26b), la première branche (21a) étant agencée pour engager l'élément de retenue (6a) pouvant être fléchi élastiquement et la deuxième branche (21b) étant agencée pour engager le deuxième élément de retenue (6b) pouvant être fléchi élastiquement.
